# EUROPEAN PATENT SPECIFICATION

(11) **EP 2 912 765 B1**
(45) Date of publication and mention of the grant of the patent: **01.08.2018**
(21) Application number: 13799092.5
(22) Date of filing: 24.10.2013
(51) Int. Cl.: H02P 9/08, H02P 9/10, H02P 9/30

(54) **DYNAMO-ELECTRIC MACHINE**
DYNAMOELEKTRISCHE MASCHINE
MACHINE DYNAMO-ÉLECTRIQUE

(30) Priority: 24.10.2012 FI 20126099
(43) Date of publication of application: 02.09.2015
(73) Proprietor: Wärtsilä Finland Oy, 65380 Vaasa (FI)
(72) Inventor: RIIHIMÄKI, Vesa, FI-65350 Vaasa (FI); MAHLANEN, Timo, FI-00850 Helsinki (FI)
(74) Representative: Berggren Oy, Helsinki & Oulu
(86) International application number: PCT/FI2013/051004
(87) International publication number: WO 2014/064337

(56) References cited:
- EP-A1- 1 959 555
- US-A- 3 863 137
- US-A- 4 032 835

## Description

### TECHNICAL FIELD

The invention concerns in general the technical field of dynamo-electric machines. Especially the invention concerns brushless excitation systems for AC generators.

### BACKGROUND OF THE INVENTION

Electric generator is a device for converting mechanical energy to electrical energy. This is achieved by arranging so called rotor to rotate around so called stator. Either of the mentioned elements is excited and thus an alternating electric current is induced to the other mentioned element as a result of the rotation of the elements in relation to each other. The rotor and the stator belong to so called excitation circuit of the generator. Additionally, the excitation circuit may comprise other elements, such as a rectifier for converting the alternating current (AC) to direct current (DC) in order to feed the DC current to a field winding for producing the main output voltage in the stator of the generator.

In addition to the excitation circuit the excitation system of the generator comprises a control circuitry for controlling the excitation circuit. The control circuitry comprises a powering element and voltage regulator element, such as automatic voltage regulator (AVR) in order to automatically maintain a desired voltage level within the excitation system. As a prerequisite of the system in order to operate the AVR needs to be powered and the rotor in the excitation circuit needs to rotate. This is required in at least brushless excitation systems.

Generally speaking the powering of the excitation system is taken from the voltage induced in the stator. The AC voltage is adjusted on an appropriate level by means of a transformer, which is configured to transform the voltage from the excitation circuit appropriate to the excitation system of the generator. Thus, it can be said that the excitation system is configured to power itself.

The activation i.e. start-up of the generator is a special situation due to the fact that the excitation of the system needs to be arranged in order to make the system to operate. In practice this means that pre-excitation is needed for achieving the voltage in the stator to rise on such a level that the excitation circuit produces enough power for at least its needs and thus the system starts to operate.

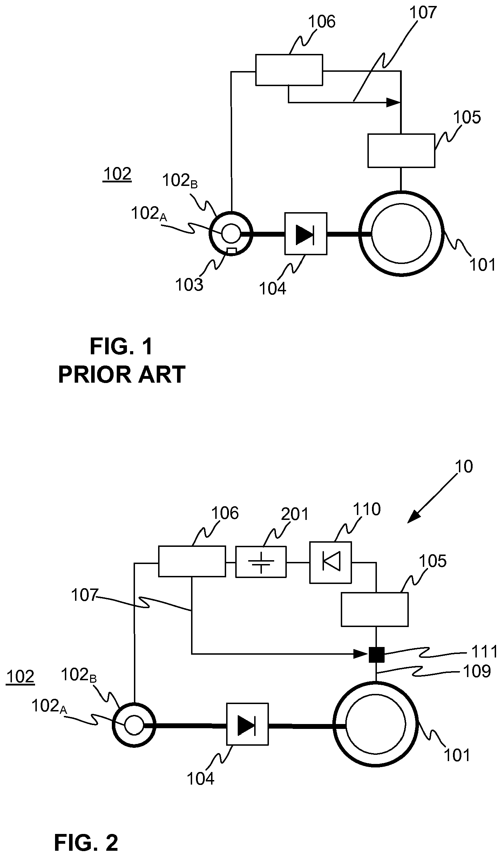

A first known solution, as illustrated in Fig. 1, for achieving pre-excitation for the generator 101 is an arrangement in which a permanent magnet 103 is embedded into an exciter 102. More specifically, the exciter 102 comprises a rotor 102_{A} and a stator 102_{B} for producing an excitation voltage for the generator 101. Further, the permanent magnet 103 is embedded in the stator 102_{B} of the exciter 102. The magnetic field of the permanent magnet 103 produces a voltage in the rotor 102_{A}, when the rotor is rotating, which is enough to induce a preliminary current for a rotor main field of the generator 101, and thus initiate the operation of the generator 101. Fig. 1 also illustrates a rectifier 104 for converting AC current from the exciter 102 to DC current for the generator 101. Additionally, Fig. 1 illustrates a transformer 105 for adjusting the output voltage level of the generator 101 appropriate to a voltage regulator 106, such as AVR, which, in turn, is arranged to control the operation of the exciter 102. The problem with this kind of solution is that because voltage is the product of magnetic flux and speed of rotation, there is no voltage build up at standstill. The voltage will build up only when there is sufficient rotation.

Another known solution for achieving a pre-excitation is an arrangement in which auxiliary DC power sources, for example battery or DC power taken from the separate system, is installed in parallel with the stator of the exciter 102 in order to bring the voltage level in the stator high enough and thus enabling the excitation system to power itself. As the necessary voltage level is reached the auxiliary DC power voltage sources are disconnected from the stator of the exciter.

Relevant prior art can be found in e.g. US 3 863 137 A (MISHIMA NOBUO ET AL). The main drawback of the described prior art solutions is that they are slow in use. For example, with a generator connected to reciprocating internal combustion engine, it may take even 15 to 30 seconds from the start-up of the generator/engine to reach such a voltage level, which also enables the feeding of the excitation system. In some environments this is not acceptable delay. For instance, in generators which are arranged as back-up systems for supplying electricity it is preferred that start-up delay is as short as possible.

### SUMMARY OF THE INVENTION

An objective of the invention is to present a dynamo-electric machine comprising generator excitation system which enables a fast start-up of a generator. The objects of the invention are reached by a machine as defined by the respective independent claim.

According to a first aspect, a dynamo-electric machine is provided, which comprises a generator with a field winding, the generator being connected with its output to a bus bar, a brushless type exciter which feeds the generator field winding, the exciter comprising an exciter field winding. Further, the dynamo-electric machine according to the first aspect comprises a transformer connected to the bus bar, a rectifier connected to transformer for rectifying the output voltage of the transformer, a voltage regulator for regulating the bus bar voltage, and an auxiliary DC current source is arranged in series between the rectifier and the voltage regulator.

The auxiliary DC current source is be a battery. Further, the battery is configured to provide a voltage level matching with the maximum exciter field voltage which is needed during transient conditions. The voltage level of the battery may be between 100-250 V DC.

The rectifier within the dynamo-electric machine may be a thyristor-controlled rectifier bridge configured to be actuated by ignition angle signals from the voltage regulator.

The voltage regulator may be connected to bus bar monitoring means for regulating the bus bar voltage by controlling the voltages to exciter field winding and the generator a field winding.

Excitation of the dynamo-electric machine is battery assisted. This has an advantage in that the machine is not dependant on power grid state or external DC power supply systems during start-up.

The battery is selected to be applicable to the situation. The battery provides sufficient voltage and power at the very initial moments of start-up.

Power supply to a voltage regulator is same during and after start-up. No switching is needed to from external power supply to generator supply. Thus the control of the excitation system is not so dependant from the rotational speed of the shaft of the prime mover, such as reciprocating internal combustion engine.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

- Fig. 1: illustrates an excitation solution according to prior art, and
- fig. 2: illustrates schematically a dynamo-electric machine according the invention.

### DETAILED DESCRIPTION OF THE INVENTION AND ITS ADVANTAGEOUS EMBODIMENTS

Figure 2 illustrates the invention as a diagram. As already discussed in the context of the prior art solution the exciter 102 is configured to produce an initiation voltage for the generator 101 to make the system to operate.

Fig. 2 discloses dynamo-electric machine 10 comprising a generator 101. The output the generator 101 is connected to a bus bar 109, which leads to a grid (not shown). The generator is supplied with brushless excitation system. The field winding of the generator 101 is fed by a brushless type exciter 102, which generates an AC voltage, which is rectified by means of an internal rectifier 104. The exciter 102 comprises a rotor 102_{A} and a stator 102_{B}. The field winding of the exciter 102 is supplied with a DC current.

The exciter 102 is arranged to be controlled by a voltage regulator 106, such as an automatic voltage regulator (AVR). AVR is an electrical regulator designed to automatically maintain a certain voltage level. The AVR senses the voltage in the main generator winding/terminal and controls the power fed to the exciter field. AVR may also have protecting or limiting functions for magnetizing system of dynamo-electric machine.

The voltage regulator 106 also comprises a feedback coupling 107 by means of which the excitation system can be controlled. Feedback coupling 107 is configured to monitor generator monitoring means 111. Additional measurements can, for example, be arranged for magnetization current, reactive power and effective power with a corresponding measurement apparatus. Based on these measurements the AVR controls rectifier 110 and its output voltage.

In order to enable a rapid operation of the exciter 102 in the start-up of the dynamo-electric machine 10, a power source 201 is arranged in series with the voltage regulator 106. The power source 201 is configured to provide an initiation voltage for the power regulator 106, which then is arranged to feed the exciter 102 immediately in the start-up and thus the rotor of the exciter is enabled to producing a voltage for the generator main field. As a result the output voltage in the generator starts to increase and the powering of the exciter circuit is achieved.

The rectifier 110 may be a thyristor-controlled rectifier bridge configured to be actuated by ignition angle signals from the voltage regulator 106. The power source 201, such as battery, is arranged in series between the rectifier 110 and the voltage regulator 106. This has an advantage in that the voltage regulator 106 may have constant input voltage during starting and running stage. This simplifies the control features in the voltage regulator 106, because the rotational speed of the shaft driven by prime mover, such as speed of reciprocating internal combustion engine, does not have any significant effect on controlling the excitation system.

The power source 201 is advantageously a battery with a capacity applicable to the situation. In other words, the battery needs to provide sufficient voltage and power at the very initial moments of start-up. The voltage selection for the battery depends solely on the design of the AVR and the exciter field. The voltage level the battery is configured to provide shall match with the maximum exciter field voltage which is needed during transient conditions.

The electric charge capacity of the battery in ampere-hour (Ah) is advantageously in minimum 30 seconds power at maximum AVR power output, in order to sustain full output during any grid transient situation.

Voltage may be selected so that it is high enough to supply maximum exciter field voltage continuously for 30 seconds (this voltage level is typically around 100 - 250V DC).

The current should be the maximum allowed momentary exciter field current during a short circuit situation. The applicable battery types may be nickel cadmium battery, lead acid battery, lithium ion battery and even power capacitors may be used.

The charging of the battery may be arranged so that the battery is charged during operation from a dedicated power supply transformer which is connected to the terminals of the machine. When in standstill, the normal low voltage power supply from the grid can be used for maintaining the charge in the battery. As in most cases for emergency starts, the grid power is not available, but as the battery has been charged full, a quick start-up of the system can be arranged even during black out situation.

The main benefit is that the AVR power supply level maintains at a constant level even during a transient situation in the grid. This arrangement also allows the battery to be charged automatically.

Thyristor control of the rectifier which is supplying power to the battery is set to maintain the specified voltage level at the battery. If the supply AC voltage is so low, that rectifier cannot charge, backward feeding of power is prevented by rectifier configuration. If the supply AC voltage is too high, the thyristor control is arranged to reduce the supply DC voltage to the design level so that battery has always the constant voltage level.

The voltage regulator, such as AVR (Automatic Voltage regulator), is configured to take care of voltage control of the generator. In order to maintain generator voltage and reactive power at target levels, it is arranged to draw more power from the battery and feed it to the generator excitation system. Having a constant and solid DC power supply makes the AVR control more accurate as one variable (i.e. supply voltage level) is eliminated from the factors that impact the control accuracy.

In order to provide DC voltage to the rectifier 110 from the generator 101 a transformer 105 is arranged to convert AC voltage to DC voltage. Typically, the transformers 105 applied in the environments as described are dry type applicable in medium speed generator applications. Alternatively, some liquid-filled transformers may be applied, such as oil filled transformers. Some advantageous embodiments according to the invention were described above. The invention is not limited to the embodiments described. The inventive idea can be applied in numerous ways within the scope defined by the claims attached hereto.

## Claims

1. A dynamo-electric machine (10), comprising
- a generator (101) with a field winding, the generator being connected with its output to a bus bar (109),
- a brushless type exciter (102) which feeds the generator field winding, the exciter (102) comprising an exciter field winding,
- a transformer (105) connected to the bus bar (109),
- a rectifier (110) connected to transformer (105) for rectifying the output voltage of the transformer (105),
- a voltage regulator (106) for regulating the bus bar (109) voltage by controlling the power fed to the exciter,
**characterized in that** an auxiliary DC current source (201) is arranged in series between the rectifier (110) and the voltage regulator (106) wherein the auxiliary DC current source (201) is a battery that is configured to provide a voltage level matching with the maximum exciter field voltage which is needed during transient conditions.

2. The dynamo-electric machine (10) according to claim 1, **characterized in that** the voltage level of the battery is between 100-250 V DC.

3. The dynamo-electric machine (10) according to any previous claim, **characterized in that** the rectifier (110) is a thyristor-controlled rectifier bridge configured to be actuated by ignition angle signals from the voltage regulator (106).

4. The dynamo-electric machine (10) according to any previous claim, **characterized in that** the voltage regulator (106) is connected to bus bar monitoring means (111) for regulating the bus bar voltage by controlling the voltages to exciter field winding and the generator a field winding.

## Patentansprüche

1. Dynamo-elektrische-Maschine (10), die Folgendes umfasst:
- einen Generator (101) mit einer Feldwicklung, wobei der Generator mit seinem Ausgang mit einer Sammelschiene (109) verbunden ist,
- einen Erreger (102) vom bürstenlosen Typ, der die Generatorfeldwicklung speist, wobei der Erreger (102) eine Erregerfeldwicklung umfasst,
- einen Transformator (105), der mit der Sammelschiene (109) verbunden ist,
- einen Gleichrichter (110), der mit dem Transformator (105) zum Gleichrichten der Ausgangsspannung des Transformators (105) verbunden ist,
- einen Spannungsregler (106) zum Regeln der Spannung der Sammelschiene (109) durch Steuern der Leistung, die dem Erreger zugeführt wird,
**dadurch gekennzeichnet, dass** eine Gleichspannung-Hilfsstromquelle (201) zwischen dem Gleichrichter (110) und dem Spannungsregler (106) in Reihe angeordnet ist, wobei die Gleichspannung-Hilfsstromquelle (201) eine Batterie ist, die dazu konfiguriert ist, einen Spannungspegel bereitzustellen, der mit der maximalen Erregerfeldspannung übereinstimmt, die während transienten Bedingungen benötigt wird.

2. Dynamo-elektrische-Maschine (10) nach Anspruch 1, **dadurch gekennzeichnet, dass** der Spannungspegel der Batterie zwischen einer Gleichspannung von 100-250 V liegt.

3. Dynamo-elektrische-Maschine (10) nach einem vorhergehenden Anspruch, **dadurch gekennzeichnet, dass** der Gleichrichter (110) eine thyristorgesteuerte Gleichrichterbrücke ist, die dazu konfiguriert ist, durch Zündwinkelsignale von dem Spannungsregler (106) angesteuert zu werden.

4. Dynamo-elektrische-Maschine (10) nach einem vorhergehenden Anspruch, **dadurch gekennzeichnet, dass** der Spannungsregler (106) mit einem Sammelschienenüberwachungsmittel (111) zum Regeln der Sammelschienenspannung durch Steuern der Spannungen zur Erregerfeldwicklung und zur Generatorfeldwicklung verbunden ist.

## Revendications

1. Machine dynamo-électrique (10), comprenant
- un générateur (101) possédant un enroulement de champ, le générateur étant relié par sa sortie à une barre omnibus (109),
- une excitatrice de type sans balai (102) qui alimente l'enroulement de champ du générateur, l'excitatrice (102) comprenant un enroulement de champ d'excitatrice,
- un transformateur (105) relié à la barre omnibus (109),
- un redresseur (110) relié au transformateur (105) pour redresser la tension de sortie du transformateur (105),
- un régulateur de tension (106) servant à réguler la tension de la barre omnibus (109) en contrôlant la puissance fournie à l'excitatrice,
**caractérisée en ce qu'**une source de courant CC auxiliaire (201) est disposée en série entre le redresseur (110) et le régulateur de tension (106), la source de courant CC auxiliaire (201) étant une batterie qui est configurée pour fournir un niveau de tension qui correspond à la tension de champ d'excitatrice maximale qui est nécessaire durant les régimes transitoires.

2. Machine dynamo-électrique (10) selon la revendication 1, **caractérisée en ce que** le niveau de tension de la batterie est situé entre 100 Vcc et 250 Vcc.

3. Machine dynamo-électrique (10) selon l'une quelconque des revendications précédentes, **caractérisée en ce que** le redresseur (110) est un pont redresseur commandé par thyristors, configuré pour être actionné par des signaux d'angle d'allumage issus du régulateur de tension (106).

4. Machine dynamo-électrique (10) selon l'une quelconque des revendications précédentes, **caractérisée en ce que** le régulateur de tension (106) est relié à un moyen de surveillance de barre omnibus (111) pour réguler la tension de barre omnibus en commandant les tensions appliqués à l'enroulement de champ d'excitatrice et à l'enroulement de champ du générateur.
